(19) Europäisches Patentamt / European Patent Office / Office européen des brevets

(11) **EP 4 685 981 A1**

(12) **EUROPEAN PATENT APPLICATION**
published in accordance with Art. 153(4) EPC

(43) Date of publication:
**28.01.2026 Bulletin 2026/05**

(21) Application number: **23928466.4**

(22) Date of filing: **26.12.2023**

(51) International Patent Classification (IPC):
*H01M 50/528* (2021.01)  *H01M 50/538* (2021.01)

(52) Cooperative Patent Classification (CPC):
**H01M 50/528; H01M 50/538;** Y02E 60/10

(86) International application number:
**PCT/CN2023/141912**

(87) International publication number:
**WO 2024/193162 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.03.2023  CN 202320599906 U**

(71) Applicant: **Sunwoda Mobility Energy Technology Co., Ltd.**
**Shenzhen, Guangdong 518107 (CN)**

(72) Inventors:
• **YANG, Wei**
 **Shenzhen, Guangdong 518107 (CN)**
• **ZHANG, Meng**
 **Shenzhen, Guangdong 518107 (CN)**
• **CHEN, Hui**
 **Shenzhen, Guangdong 518107 (CN)**
• **ZHANG, Yao**
 **Shenzhen, Guangdong 518107 (CN)**

(74) Representative: **Elzaburu S.L.P.**
**Edificio Torre de Cristal**
**Paseo de la Castellana 259 C, planta 28**
**28046 Madrid (ES)**

(54) **BATTERY AND ELECTRICAL APPARATUS**

(57) A battery and an electrical device are disclosed therein. The battery includes: an electrode assembly, the electrode assembly includes a winding core main body and a tab provided on the winding core main body; one end of the tab is connected with the winding core main body; and a connecting sheet, the connecting sheet is welded with the other end of the tab, a welding mark is formed on the connecting sheet; where the welding mark has a welding width of $L_1$ mm and a depth of $H_1$ mm, the connecting sheet has a thickness of $H_2$ mm, and the battery satisfies: $0.1 \leq L_1 \times (H_1/H_2) \leq 1.75$. In the present application, by defining the relationship of the welding width and depth of the welding mark and the thickness of the connecting sheet, the problem of incomplete welding caused by tab misalignment can be avoided, improving the welding yield between the connecting sheet and the tab, and further improving the overall safety performance of the battery.

FIG. 4

## Description

The present application claims priority to Chinese Patent Application No. 202320599906.4 filed with China National Intellectual Property Administration on March 23, 2023 and entitled "Battery and Electrical Device", which is hereby incorporated by reference in its entirety.

## TECHNICAL FIELD

The Embodiments of the present application relate to but are not limited to the technical field of batteries, and specifically relate to a battery and an electrical device.

## BACKGROUND

At present, the electrical connection between an electrode assembly and a connecting sheet is achieved by ultrasonic welding between a tab provided on the electrode assembly and the connecting sheet. The tab is a multi-layer structure; during the ultrasonic welding of the tab with the connecting sheet, due to misalignment of the tab, the welding mark is prone to deviate from the tab, which results in poor welding yield and seriously affects the service performance of the battery.

## TECHNICAL PROBLEM

The present application provides a battery and an electrical device, so as to solve the problem of poor welding yield between a multi-layer tab and a connecting sheet.

## TECHNICAL SOLUTION

The following is a summary of the subject matter described in detail therein. This summary is not intended to limit the protection scope of the claims.

In a first aspect, the present application provides a battery, including:

an electrode assembly, the electrode assembly includes a winding core main body and a tab provided on the winding core main body; one end of the tab is connected with the winding core main body;

a connecting sheet, the connecting sheet is welded with the other end of the tab and a welding mark is formed on the connecting sheet;

where the welding mark has a welding width of $L_1$ mm, the welding mark has a depth of $H_1$ mm, the connecting sheet has a thickness of $H_2$ mm, and the battery satisfies: $0.1 \leq L_1 \times (H_1/H_2) \leq 1.75$.

Optionally, the battery further satisfies: $0.1 \leq L_1 \times (H_1/H_2) \leq 0.75$.

Optionally, the battery further satisfies: $0.5 \leq L_1 \times (H_1/H_2) \leq 1.5$.

Optionally, the battery satisfies: $0.2 \leq H_1/H_2 \leq 0.99$.

Optionally, the battery satisfies: $0.2 \leq H_1/H_2 \leq 0.75$.

Optionally, the battery satisfies at least one of the following conditions:

a) $0.3 \leq L_1 \leq 1.2$;

b) $0.3 \leq H_1 \leq 1.5$;

c) $0.6 \leq H_2 \leq 1.5$.

Optionally, the battery satisfies at least one of the following conditions:

e) $0.5 \leq L_1 \leq 1.0$;

f) $0.3 \leq H_1 \leq 1.0$;

g) $0.6 \leq H_2 \leq 1.5$.

Optionally, the connecting sheet includes a connecting body, a first connecting part, and a second connecting part;

the first connecting part is provided on the connecting body and connected with the connecting body;

along a second direction y, the second connecting part is connected with an end of the connecting body; the second connecting part is welded with the tab;
where the welding mark has an area of $S_1$ mm$^2$, the tab has an area of $S_2$ mm$^2$, and the second connecting part has an area of $S_3$ mm$^2$, which satisfy:
$0.2 \leq S_1/S_2 \leq 0.8$; or,
$0.2 \leq S_1/S_3 \leq 0.8$.

Optionally, two second connecting parts are provided, the two second connecting parts are arranged symmetrically along a central axis of the connecting body, and the two second connecting parts extend from the end of the connecting body along a first direction x; where the first direction x and the second direction y intersect.

Optionally, a shape of the welding mark is at least one of quadrilateral, circle, sector, ellipse, sectorial ring and circular ring.

Optionally, one or more welding marks are provided.

Optionally, a plurality of welding marks are provided, and the plurality of welding marks are arranged in parallel or intersectingly.

Optionally, the battery further includes:

a housing, the housing has an accommodating cavity, and the electrode assembly is located in the accommodating cavity;
a top cover assembly, the top cover assembly includes a cover plate and a terminal post provided on the cover plate, the cover plate is connected with the housing and seals the accommodating cavity, and the terminal post is connected with the first connecting part.

In a second aspect, the present application also provides an electrical device, including the described battery.

## BENEFICIAL EFFECTS

Compared with the prior art, the battery provided by the present application includes: an electrode assembly, where the electrode assembly includes a winding core main body and a tab provided on the winding core main body; one end of the tab is connected with the winding core main body; and a connecting sheet, where the connecting sheet is welded with the other end of the tab, and a welding mark is formed on the connecting sheet; where the welding mark has a welding width of $L_1$ mm, the welding mark has a depth of $H_1$ mm, the connecting sheet has a thickness of $H_2$ mm, and the battery satisfies: $0.1 \leq Lix(H_1/H_2) \leq 1.75$. By defining the relationship among the welding width of the welding mark, the depth of the welding mark and the thickness of the connecting sheet, the present application avoids the problem of incomplete welding caused by tab misalignment, improves the welding yield between the connecting sheet and the tab, and further improves the overall safety performance of the battery.

It can be understood that the electrical device provided by the present application has all the technical features and beneficial effects of the foregoing battery, which will not be repeated herein.

## BRIEF DESCRIPTION OF DRAWINGS

FIG. 1 is a schematic structural diagram of a battery provided by an embodiment of the present application.
FIG. 2 is a schematic structural diagram of a winding core main body provided by an embodiment of the present application.
FIG. 3 is a schematic cross-sectional diagram along a direction A-A in FIG. 2.
FIG. 4 is a partial enlarged diagram of an area B in FIG. 3.
FIG. 5 is a schematic structural diagram of a welding mark provided by an embodiment of the present application.
FIG. 6 is a schematic structural diagram of another welding mark provided by an embodiment of the present application.
FIG. 7 is a schematic structural diagram of yet another welding mark provided by an embodiment of the present application.

Reference signs: 1-electrode assembly, 2-connecting sheet, 3-welding mark, 4-housing, 5-top cover assembly, 11-winding core main body, 12-tab, 21-connecting body, 22-first connecting part, 23-second connecting part, 41-accommodating cavity, 51-cover plate, 52-terminal post.

## DESCRIPTION OF EMBODIMENTS OF THE PRESENT APPLICATION

The technical solutions in embodiments of the present application will be clearly and completely described hereinafter with reference to the accompanying drawings in the embodiments of the present application. The described embodiments are merely some of the embodiments of the present application, rather than all the embodiments. Based on the embodiments in the present application, all other embodiments obtained by those skilled in the art without creative efforts shall fall within the protection scope of the present application.

The following disclosure provides many different embodiments or examples for implementing different structures of the present application. To simplify the disclosure of the present application, the components and arrangements of specific examples are described hereinafter. Apparently, they are merely examples and are not intended to limit the present application.

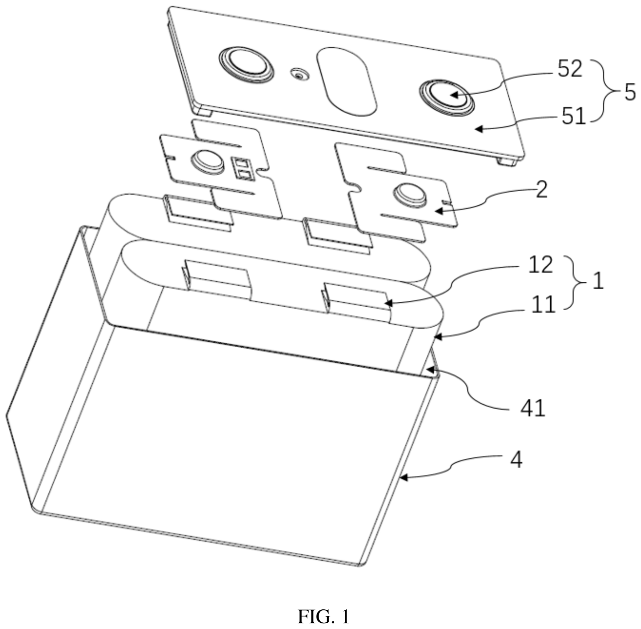

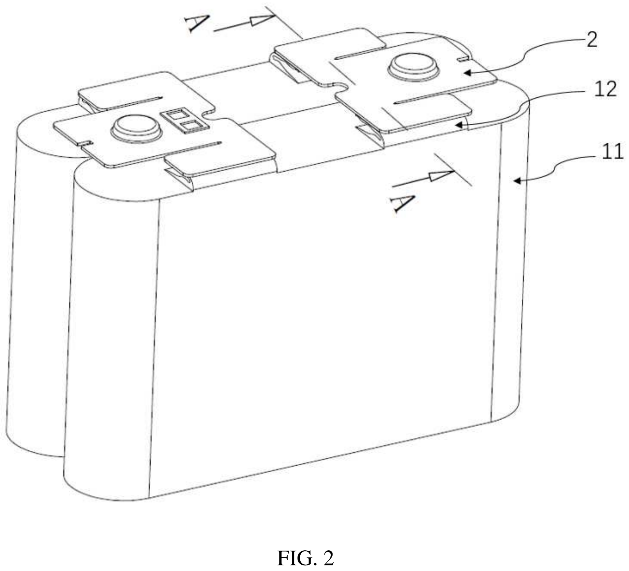

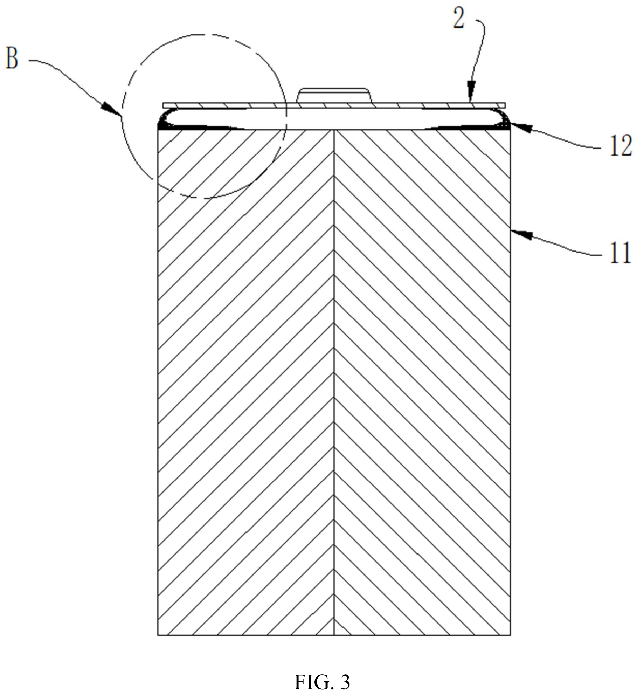

Referring to FIG. 1, FIG. 2, FIG. 3 and FIG. 4, a battery is provided, which includes: an electrode assembly 1 and a connecting sheet 2, where the electrode assembly 1 includes a winding core main body 11 and a tab 12 provided on the winding core main body 11; one end of the tab 12 is connected with the winding core main body 11; the connecting sheet 2 is welded with the other end of the tab 12, and a welding mark 3 is formed on the connecting sheet 2; where the welding mark 3 has a welding width of $L_1$ mm, the welding mark 3 has a depth of $H_1$ mm, the connecting sheet 2 has a thickness of $H_2$ mm, and the battery satisfies: $0.1 \leq L_1 \times (H_1/H_2) \leq 1.75$.

In one of the embodiments, the tab 12 is led out from the winding core main body 11; that is, the tab 12 is led out from a foil of the winding core main body 11.

In some embodiments, when the relationship $0.1 \leq L_1 \times (H_1/H_2) \leq 1.75$ is satisfied, the reliability of the welding between the connecting sheet 2 and the tab connecting part 122 can be ensured through the size of the welding mark 3, so as to avoid the problem of incomplete welding caused by the misalignment of the tab 12. Since the welding width and depth of the welding mark 3 directly determine the bonding strength thereof with the connecting sheet 2, the bearing capacity of a welding process can be improved when the above relationship is satisfied, and the welding yield between the connecting sheet 2 and the tab 12 is ensured.

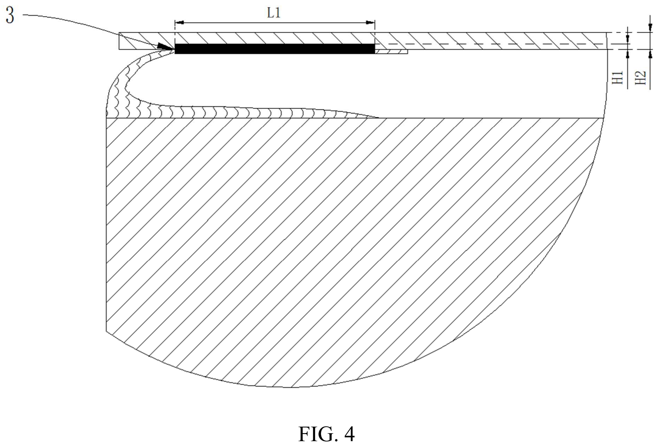

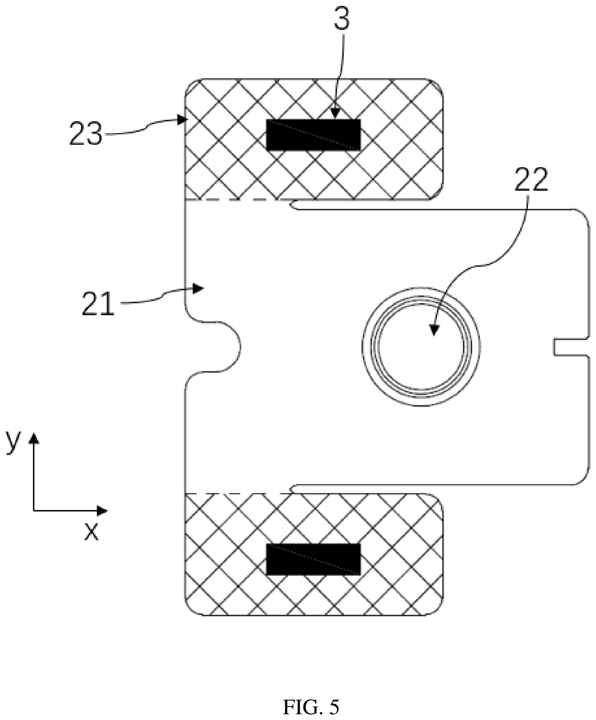

In some embodiments, further referring to FIG. 4 and FIG. 5, the welding mark 3 is a structure formed by the welding process, where the width of the welding mark 3, when viewed upward perpendicular to a lower surface of the connecting sheet 2, is the welding width; the welding depth refers to a depth at which a thickness of the multi-layer tab 12 extends upward from the lower surface of the connecting sheet 2, also called a molten pool depth.

In some embodiments, the battery further satisfies: $0.2 \leq L_1 \times (H_1/H_2) \leq 1.6$. When $0.2 \leq L_1 \times (H_1/H_2) \leq 1.6$ is satisfied, it can be further conducive to the welding between the connecting sheet 2 and the tab 12, and ensure a good welding yield between the connecting sheet 2 and the tab 12.

In some embodiments, the battery further satisfies: $0.5 \leq L_1 \times (H_1/H_2) \leq 1.5$. When $0.5 \leq L_1 \times (H_1/H_2) \leq 1.5$ is satisfied, it can be further conducive to the welding between the connecting sheet 2 and the tab 12, and ensure a good welding yield between the connecting sheet 2 and the tab 12.

In some embodiments, the battery further satisfies: $0.2 \leq H_1/H_2 \leq 0.99$, preferably, $0.2 \leq H_1/H_2 \leq 0.75$. It can be understood that when the depth $H_1$ of the welding mark 3 and the thickness $H_2$ of the connecting sheet 2 satisfy the above relationship, a high bonding strength between the welding mark 3 and the connecting sheet 2 can be ensured, so as to further improve the welding yield between the connecting sheet 2 and the tab 12.

In some embodiments, the battery further satisfies: $0.3 \leq L_1 \leq 1.2$, $0.3 \leq H_1 \leq 1.5$, $0.6 \leq H_2 \leq 1.5$; more preferably, $0.5 \leq L_1 \leq 1.0$, $0.3 \leq H_1 \leq 1.0$, $0.6 \leq H_2 \leq 1.5$. Where, $L_1$ may be any one of 0.3 mm, 0.4 mm, 0.5 mm, 0.6 mm, 0.7 mm, 0.8 mm, 0.9 mm, 1.0 mm, 1.1 mm and 1.2 mm or a value in a range between any two values thereof; $H_1$ may be any one of 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm and 1.5 mm or a value in a range between any two values thereof; $H_2$ may be any one of 0.6 mm, 0.7 mm, 0.8 mm, 0.9 mm, 1.0 mm, 1.1 mm, 1.2 mm, 1.3 mm, 1.4 mm and 1.5 mm or a value in a range between any two values thereof. When the above ranges are satisfied, the process parameters of the welding mark 3 and the dimensional relationship between the welding mark 3 and the connecting sheet 2 can be further determined, so as to ensure the welding effect between the connecting sheet 2 and the tab 12.

In some embodiments, referring to FIG. 5, the connecting sheet 2 includes a connecting body 21, a first connecting part 22 and a second connecting part 23; the first connecting part 22 is provided on the connecting body 21 and connected with the connecting body 21; along a second direction y, the second connecting part 23 is connected with an end of the connecting body 21; the second connecting part 23 is welded with the tab 12; where the welding mark 3 has an area of $S1$ mm², the tab has an area of $S_2$ mm², and the second connecting part 23 has an area of $S_3$ mm², which satisfy: $0.2 \leq S_1/S_2 \leq 0.8$, $0.2 \leq S_1/S_3 \leq 0.8$.

It can be understood that the specific measurement method for the area $S_1$ of the welding mark 3 is as follows: disassembling a single battery, measuring a length and a width of a welding track perpendicular to a lower surface of the connecting sheet 2, and multiplying the length by the width to obtain $S_1$; the specific measurement method for the area $S_2$ of the tab is as follows: disassembling a single battery, then unfolding the tab and measuring an area of the tab, which is $S_2$;

the specific measurement method for the area $S_3$ of the second connecting part 23 is as follows: disassembling a single battery, referring to FIG. 5, where the second connecting part 23 is one of two wing zones on the lower surface of the connecting sheet 2 that are configured for welding, and measuring a length and a width of one single zone and multiplying the length by the width to obtain $S_3$.

In some embodiments, when $0.2 \leq S_1/S_2 \leq 0.8$ is satisfied, the connection reliability between the connecting sheet 2 and the tab 12 can be ensured, and in particular, the welding mark 3 may cover the tab connecting part 122, so as to improve the welding yield between the connecting sheet 2 and the tab 12. More preferably, $S_1/S_2$ may be any one of 0.2, 0.3, 0.4, 0.5, 0.6, 0.7 and 0.8 or a value in a range between any two values thereof.

In some embodiments, when $0.2 \leq S_1/S_3 \leq 0.8$ is satisfied, the welding strength of the connecting sheet 2 can be ensured, in particular, the welding mark 3 is ensured to be formed in the connecting sheet 2, which further improves the reliability of the subsequent welding of the connecting sheet 2. More preferably, $S_1/S_3$ may be any one of 0.2, 0.3, 0.4, 0.5, 0.6, 0.7 and 0.8 or a value in a range between any two values thereof.

In some embodiments, further referring to FIG. 5, two second connecting parts 23 are provided, the two second connecting parts 23 are arranged symmetrically along a central axis of the connecting body 21, and the second connecting parts 23 extend from the end of the connecting body 21 along a first direction x; where the first direction x and the second direction y intersect. The first direction x is a direction indicated by a horizontal arrow in FIG. 5, and the second direction y is a direction indicated by a vertical arrow in FIG. 5.

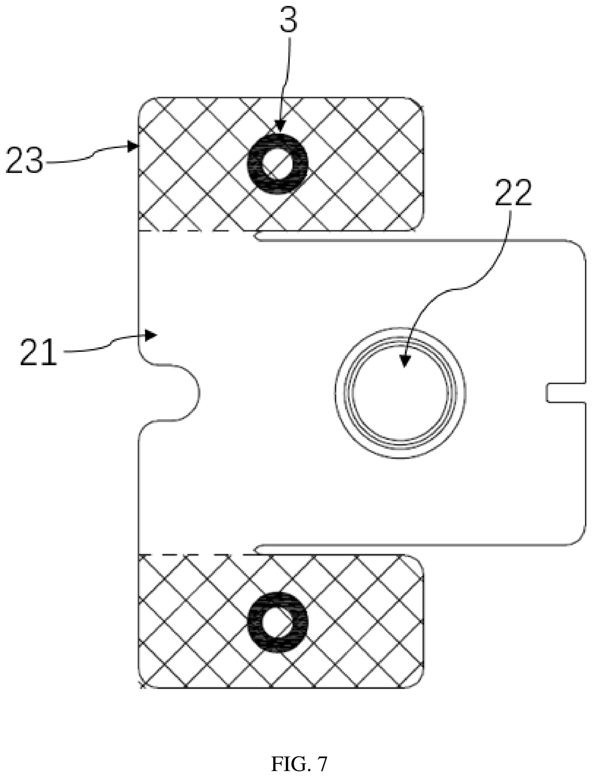

In some embodiments, the shape of the welding mark 3 is at least one of quadrilateral, circle, sector, ellipse, sectorial ring and circular ring; taking FIG. 5 as an example, the welding mark 3 is a quadrilateral; further referring to FIG. 7, the welding mark 3 in FIG. 7 is a circular ring, and the welding mark 3 is located in the second connecting part 23 of the connecting sheet 2. The shape of the welding mark 3 is subject to the requirement in actual welding; it should be noted that the shapes defined above only need to be roughly the foregoing shapes, and are not limited to perfect geometric shapes.

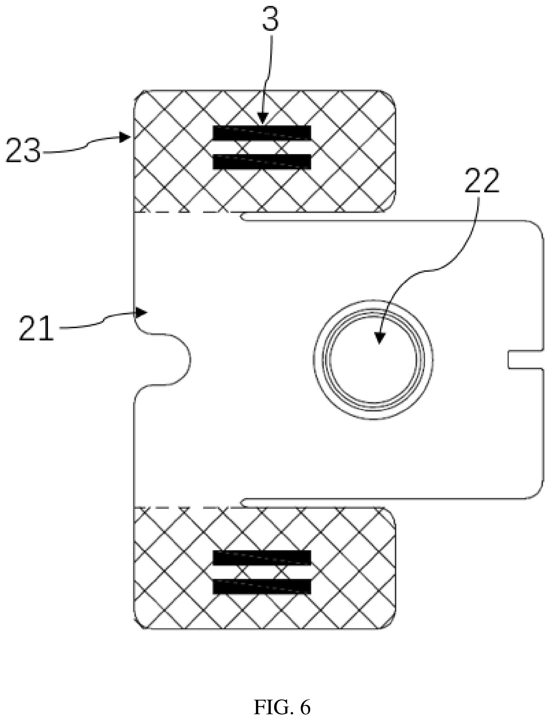

In some embodiments, the number of the welding marks 3 may be one or more; taking FIG. 5 as an example, one welding mark 3 is provided corresponding to one second connecting part 23 of the connecting sheet 2; further referring to FIG. 6, two welding marks 3 are provided corresponding to one second connecting part 23 of the connecting sheet 2, and the number of the welding marks 3 is subject to the setting in actual welding; when the number of the welding marks 3 is plurality, the area of the welding marks 3 is subject to a total area of all the welding marks.

In some embodiments, the plurality of welding marks 3 are provided in parallel or intersectingly. Taking FIG. 6 as an example, the two welding marks 3 provided corresponding to one second connecting part 23 of the connecting sheet 2 are provided in parallel; the parallel arrangement may further improve the bonding strength between the welding marks 3 and the connecting sheet 2, and ensure the welding yield of the connecting sheet 2. The "parallel" herein refers to completely parallel or almost completely parallel; for example, a deviation within 5° from complete parallelism is regarded as parallel. In some other arrangement modes, the plurality of welding marks 3 are not limited to parallel arrangement, and may also be in other arrangement modes such as intersecting.

In some embodiments, further referring to FIG. 1, the battery further includes a housing 4 and a top cover assembly 5, the housing 4 has an accommodating cavity 41, and the electrode assembly 1 is located in the accommodating cavity 41; the top cover assembly 5 includes a cover plate 51 and a terminal post 52 provided on the cover plate 51, the cover plate 51 is connected with the housing 4 and seals the accommodating cavity 41, and the terminal post 52 is connected with the first connecting part 22. Specifically, the second connecting part 23 of the connecting sheet 2 and the tab connecting part 122 are welded by laser or ultrasonic wave, and the terminal post 52 and the first connecting part 22 are welded by laser; the electrical connection between the winding core main body 11 and the top cover assembly 5 is further achieved through the above welding; the cover plate 51 seals the accommodating cavity 41, and a periphery of the top cover assembly 5 is sealed with the housing 4 by laser welding, so as to form the battery as shown in FIG. 1. By defining the dimensional relationship between the welding mark 3 and the connecting sheet 2, problems such as incomplete welding caused by the misalignment of the tab 12 can be avoided, the welding yield between the connecting sheet 2 and the tab 12 is improved, and further the service safety of the battery is improved.

In some embodiments, the present embodiment further provides an electrical device, which adopts the battery as shown in FIG. 7; the electrical device may include, but is not limited to, a backup power supply, a motor, an electric vehicle, an electric motorcycle, an electric bicycle, a bicycle, an electric tool, a large household storage battery, etc.

8 groups of batteries are respectively provided as Examples 1-18, and the structure of each battery is as shown in FIG. 1. For each embodiment, the welding mark 3 has a welding width of $L_1$ mm, the welding mark 3 has a depth of $H_1$ mm, and the connecting sheet 2 has a thickness of $H_2$ mm; specific parameters are shown in Table 1, and Examples 1-18 all satisfy the relationship $0.1 \leq L_1 \times (H_1/H_2) \leq 1.75$. Where, a specific measurement method for the welding width $L_1$ of the welding mark 3 is as follows: a track of a laser welding mark viewed upward from a lower surface of the connecting sheet 2 is the welding mark 3, and the welding width $L_1$ can be obtained by directly measuring the width of the welding mark with a caliper; a measurement method for the depth $H_1$ of the welding mark 3 is as follows: taking a cross-section in FIG. 4 as an example, a surface is polished, then treated with a chemical solution; since grain shapes of molten metal and unmolten metal are different, the molten metal may be clearly seen after treatment with the chemical solution, and a maximum distance of the molten metal from the lower surface of the connecting sheet 2 is measured with a caliper or a two-dimension to obtain the welding depth $H_1$; a test method for the thickness $H_2$ of the connecting sheet 2 is as follows: before welding, a thickness between the upper and lower surfaces of the connecting sheet 2 is directly measured with a caliper to obtain the thickness $H_2$.

Comparative Examples 1-3 are respectively provided; the battery structures of Comparative Examples 1-3 are the same as that of Example 1, except that the relationship $0.1 \leq L_1 \times (H_1/H_2) \leq 1.75$ is not satisfied in Comparative Examples 1-3.

The battery performance is characterized by the welding yield between the connecting sheet 2 and the tab 12; specific test data are shown in Table 1. Where, the test method for the welding yield is as follows: after welding, 2000 samples of the examples and comparative examples are respectively taken, and defective products and qualified products are classified by observing appearance defects of the welds; the characteristics of the defective products include incomplete welding, pits, spatter, missing welding and burn-through; the characteristics of the qualified products include smooth and flat appearance; the number of the defective products is counted, and the proportion of the qualified products is calculated to obtain the data of the welding yield.

Table 1

|  | $L_1$ (mm) | $H_1$ (mm) | $H_2$ (mm) | $S_1/S_2$ | $S_1/S_3$ | $L_1 \times (H_1/H_2)$ | welding yield |
|---|---|---|---|---|---|---|---|
| Example 1 | 0.3 | 0.3 | 0.6 | 0.5 | 0.5 | 0.15 | 92.11% |
| Example2 | 0.5 | 0.3 | 0.8 | 0.5 | 0.5 | 0.19 | 99.79% |
| Example3 | 0.8 | 0.5 | 1 | 0.5 | 0.5 | 0.40 | 99.82% |
| Example 4 | 1 | 1 | 1.2 | 0.5 | 0.5 | 0.83 | 99.74% |
| Example 5 | 1.2 | 1.3 | 1.5 | 0.5 | 0.5 | 1.04 | 99.72% |
| Example 6 | 1.5 | 0.5 | 1 | 0.5 | 0.5 | 0.75 | 99.74% |
| Example 7 | 0.8 | 0.4 | 0.55 | 0.5 | 0.5 | 0.58 | 95.92% |
| Example 8 | 0.8 | 0.5 | 1.8 | 0.5 | 0.5 | 0.22 | 99.71% |
| Example 9 | 0.8 | 0.5 | 1 | 0.2 | 0.5 | 0.40 | 92.03% |
| Example 10 | 0.8 | 0.5 | 1 | 0.8 | 0.5 | 0.40 | 96.24% |
| Example 11 | 0.8 | 0.5 | 1 | 0.5 | 0.2 | 0.40 | 91.35% |
| Example 12 | 0.8 | 0.5 | 1 | 0.5 | 0.8 | 0.40 | 99.52% |
| Example 13 | 2 | 0.7 | 0.8 | 0.5 | 0.5 | 1.75 | 99.44% |
| Example 14 | 2 | 0.45 | 0.6 | 0.5 | 0.5 | 1.5 | 98.22% |
| Example 15 | 0.8 | 0.5 | 1 | 0.1 | 0.5 | 0.40 | 81.91% |
| Example 16 | 0.8 | 0.5 | 1 | 0.9 | 0.5 | 0.40 | 90.63% |
| Example 17 | 0.8 | 0.5 | 1 | 0.5 | 0.1 | 0.40 | 80.82% |
| Example 18 | 0.8 | 0.5 | 1 | 0.5 | 0.9 | 0.40 | 88.34% |
| Comparative Example 1 | 0.1 | 0.1 | 0.5 | 0.5 | 0.5 | 0.02 | 32.11% |
| Comparative Example 2 | 2 | 1.6 | 1.7 | 0.5 | 0.5 | 1.88 | 75.24% |
| Comparative Example 3 | 2 | 0.8 | 0.8 | 0.5 | 0.5 | 2 | 12% |

As can be seen from Table 1, in Examples 1-18, since $L_1 \times (H_1/H_2)$ all satisfy the range of 0.1-1.75, Examples 1-18 have relatively high welding yield; in Comparative Example 1, the value of $L_1 \times (H_1/H_2)$ is less than 0.1, while in Comparative Examples 2 and 3, the values of $L_1 \times (H_1/H_2)$ are greater than 1.75, resulting in their welding yield all being lower than those of Examples 1-18. This indicates that when the batteries of the present embodiment satisfy the relationship of $0.1 \leq L_1 \times (H_1/H_2) \leq 1.75$, the reliability of the welding between the connecting sheet 2 and the tab 12 can be ensured through the size of the welding mark 3, thereby avoiding the problem of incomplete welding caused by the misalignment of the tab 12, and ensuring the welding yield between the connecting sheet 2 and the tab 12.

The foregoing provides a detailed description to a battery and an electrical device provided by the present application. Specific examples are used to describe the principle and embodiments of the present application therein. The description of the foregoing embodiments is only used to help understand the method of the present application and the core idea thereof; meanwhile, for those skilled in the art, based on the idea of the present application, there will be changes in the specific embodiments and application scopes. In conclusion, the content of the present description should not be construed as a limitation on the present application.

**Claims**

1. A battery, comprising:

   an electrode assembly (1), the electrode assembly (1) comprises a winding core main body (11) and a tab (12) provided on the winding core main body (11); one end of the tab (12) is connected with the winding core main body (11);
   a connecting sheet (2), the connecting sheet (2) is welded with the other end of the tab (12) and a welding mark (3) is formed on the connecting sheet (2);
   wherein the welding mark (3) has a welding width of $L_1$ mm, the welding mark (3) has a depth of $H_1$ mm, the connecting sheet (2) has a thickness of $H_2$ mm, and the battery satisfies: $0.1 \leq L_1 \times (H_1/H_2) \leq 1.75$.

2. The battery according to claim 1, wherein the battery satisfies: $0.2 \leq L_1 \times (H_1/H_2) \leq 1.6$.

3. The battery according to claim 1, wherein the battery satisfies: $0.5 \leq L_1 \times (H_1/H_2) \leq 1.5$.

4. The battery according to claim 1, wherein the battery satisfies: $0.2 \leq H_1/H_2 \leq 0.99$.

5. The battery according to claim 1, wherein the battery satisfies: $0.2 \leq H_1/H_2 \leq 0.75$.

6. The battery according to claim 1, wherein the battery satisfies at least one of the following conditions:

   a)
   $$0.3 \leq L_1 \leq 1.2;$$

   b)
   $$0.3 \leq H_1 \leq 1.5;$$

   c)
   $$0.6 \leq H_2 \leq 1.5.$$

7. The battery according to claim 1, wherein the battery satisfies at least one of the following conditions:

   e)
   $$0.5 \leq L_1 \leq 1.0;$$

   f)
   $$0.3 \leq H_1 \leq 1.0;$$

   g)
   $$0.6 \leq H_2 \leq 1.5.$$

8. The battery according to claim 1, wherein the connecting sheet (2) comprises a connecting body (21), a first connecting part (22), and a second connecting part (23);

the first connecting part (22) is provided on the connecting body (21) and connected with the connecting body (21);

along a second direction (y), the second connecting part (23) is connected with an end of the connecting body (21); the second connecting part (23) is welded with the tab (12);

the welding mark (3) has an area of $S_1$ mm$^2$, the tab (12) has an area of $S_2$ mm$^2$, the second connecting part (23) has an area of $S_3$ mm$^2$, and at least one of the following conditions is satisfied:

h)

$$0.2 \leq S_1/S_2 \leq 0.8;$$

i)

$$0.2 \leq S_1/S_3 \leq 0.8.$$

9. The battery according to claim 8, wherein two second connecting parts (23) are provided, the two second connecting parts (23) are arranged symmetrically along a central axis of the connecting body (21), and the two second connecting parts (23) extend from the end of the connecting body (21) along a first direction (x); wherein the first direction (x) and the second direction (y) intersect.

10. The battery according to claim 1, wherein a shape of the welding mark (3) is at least one of quadrilateral, circle, sector, ellipse, sectorial ring and circular ring.

11. The battery according to claim 1, wherein one or more welding marks (3) are provided.

12. The battery according to claim 11, wherein a plurality of welding marks (3) are provided, and the plurality of welding marks (3) are arranged in parallel.

13. The battery according to claim 11, wherein a plurality of welding marks (3) are provided, and the plurality of welding marks (3) are arranged to intersect each other.

14. The battery according to claim 8, further comprising:

a housing (4), the housing (4) has an accommodating cavity (41), and the electrode assembly (1) is located in the accommodating cavity (41);

a top cover assembly (5), the top cover assembly (5) comprises a cover plate (51) and a terminal post (52) provided on the cover plate (51), the cover plate (51) is connected with the housing (4) and seals the accommodating cavity (41), and the terminal post (52) is connected with the first connecting part (22).

15. An electrical device, comprising the battery according to any one of claims 1-14.

FIG. 1

FIG. 2

FIG. 3

FIG. 4

FIG. 5

FIG. 6

FIG. 7

## INTERNATIONAL SEARCH REPORT

| International application No. |
| --- |
| **PCT/CN2023/141912** |

| | |
| --- | --- |
| **A.** | **CLASSIFICATION OF SUBJECT MATTER** |
| | H01M50/528(2021.01)i; H01M50/538(2021.01)i |

According to International Patent Classification (IPC) or to both national classification and IPC

| | |
| --- | --- |
| **B.** | **FIELDS SEARCHED** |

Minimum documentation searched (classification system followed by classification symbols)

    IPC: H01M

Documentation searched other than minimum documentation to the extent that such documents are included in the fields searched

Electronic data base consulted during the international search (name of data base and, where practicable, search terms used)

    CNABS; CNTXT; WPABS; DWPI; VEN; ENTXT; CNKI: 电池, 极耳, 连接片, 焊接, 焊痕, 深度, 宽度, 厚度, battery, tab, connection peice, weld, welding mark, depth, width, thickness

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| PX | CN 219350579 U (SUNWODA ELECTRIC VEHICLE BATTERY CO., LTD.) 14 July 2023 (2023-07-14) <br> description, paragraphs 48-72, and figures 1-7 | 1-15 |
| PX | CN 116759759 A (SUNWODA POWER TECHNOLOGY CO., LTD.) 15 September 2023 (2023-09-15) <br> description, paragraphs 24-74, and figures 1-13 | 1-15 |
| X | CN 113346200 A (XIAMEN HAICHEN NEW ENERGY TECHNOLOGY CO., LTD.) 03 September 2021 (2021-09-03) <br> description, paragraphs 37-63, and figures 1-9 | 1-3, 6-15 |
| Y | CN 113346200 A (XIAMEN HAICHEN NEW ENERGY TECHNOLOGY CO., LTD.) 03 September 2021 (2021-09-03) <br> description, paragraphs 37-63, and figures 1-9 | 4-5 |
| Y | JP S60140649 A (MATSUSHITA ELECTRIC INDUSTRIAL CO., LTD.) 25 July 1985 (1985-07-25) <br> description, page 1, right-hand column, paragraph 1-page 3, left-hand column, paragraph 4, and figures 1-3 | 1-15 |

| ✓ Further documents are listed in the continuation of Box C. | ✓ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 March 2024** | **09 March 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/141912** |

### C. DOCUMENTS CONSIDERED TO BE RELEVANT

| Category* | Citation of document, with indication, where appropriate, of the relevant passages | Relevant to claim No. |
| --- | --- | --- |
| Y | JP 2019003837 A (TOYOTA INDUSTRIES CORP.) 10 January 2019 (2019-01-10)<br>description, paragraphs 15-53, and figures 1-8 | 1-15 |
| Y | CN 115832628 A (SHENZHEN HAIRUN NEW ENERGY TECHNOLOGY CO., LTD. et al.)<br>21 March 2023 (2023-03-21)<br>description, paragraphs 44-86, and figures 1-6 | 1-15 |
| A | JP H1125951 A (SANYO ELECTRIC CO., LTD.) 29 January 1999 (1999-01-29)<br>entire document | 1-15 |

Form PCT/ISA/210 (second sheet) (July 2022)

## INTERNATIONAL SEARCH REPORT
### Information on patent family members

International application No.

**PCT/CN2023/141912**

| Patent document cited in search report | | | Publication date (day/month/year) | Patent family member(s) | | | Publication date (day/month/year) |
|---|---|---|---|---|---|---|---|
| CN | 219350579 | U | 14 July 2023 | None | | | |
| CN | 116759759 | A | 15 September 2023 | CN | 116759759 | B | 02 January 2024 |
| CN | 113346200 | A | 03 September 2021 | CN | 215680903 | U | 28 January 2022 |
| JP | S60140649 | A | 25 July 1985 | None | | | |
| JP | 2019003837 | A | 10 January 2019 | JP | 6965587 | B2 | 10 November 2021 |
| CN | 115832628 | A | 21 March 2023 | CN | 115832628 | B | 09 May 2023 |
| JP | H1125951 | A | 29 January 1999 | None | | | |

Form PCT/ISA/210 (patent family annex) (July 2022)

**EP 4 685 981 A1**

REFERENCES CITED IN THE DESCRIPTION

**Patent documents cited in the description**

- CN 202320599906